# EUROPEAN PATENT APPLICATION

(11) **EP 4 518 478 A1**
(43) Date of publication of application: **05.03.2025**
(21) Application number: 22939152.9
(22) Date of filing: 28.04.2022
(51) Int. Cl.: H04W 72/04

(54) **SIGNAL SENDING APPARATUS AND METHOD, AND SIGNAL RECEIVING APPARATUS AND METHOD**

(71) Applicant: FUJITSU LIMITED, Kawasaki-shi, Kanagawa 211-8588 (JP)
(72) Inventor: ZHANG, Jian, Beijing 100022 (CN); SUN, Gang, Beijing 100022 (CN); ZHAO, Di, Beijing 100022 (CN)
(74) Representative: Haseltine Lake Kempner LLP
(86) International application number: PCT/CN2022/090095
(87) International publication number: WO 2023/206302

(57) **Abstract**

Embodiments of the present application provide signal transmitting and receiving apparatus and method. The method comprises: receiving, by a terminal equipment, TCI state indication information, the TCI state indication information indicating at least one TCI state; determining, among multiple SRS resource sets, an SRS resource set associated with an indicated TCI state; and performing uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission can be ensured.

## Description

### Technical Field

Embodiments of the present application relate to the technical field of communications.

### Background

In the standardization process of Release 17 (Rel-17), the 3GPP standardization organization has carried out standardization related work on the unified transmission configuration indication (TCI). The unified TCI in Rel-17 is designed mainly for sTRP (single transmission and reception point) scenarios.

With the advancement of the standardization work, mTRP (multiple transmission and reception point) has become an important scenario for 5G NR systems, and the purpose of improving throughput or reliability can be achieved through mTRP-based transmission.

In the previous standardization work, in Rel-16, the transmission of mTRP-based Physical Downlink Shared Channel (PDSCH) is standardized; and in Rel-17, the transmission of mTRP-based Physical Downlink Control Channel (PDCCH), Physical Uplink Shared Channel (PUSCH), Physical Uplink Control Channel (PUCCH) is standardized. mTRP transmission includes mTRP transmission based on single Downlink Control Information (sDCI) and mTRP transmission based on multiple DCI (mDCI).

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the backgroud of the present application.

### Summary

However, the inventor finds that, the unified TCI in Rel-17 is only applicable to sTRP scenarios, considering the importance of mTRP, it is necessary to design a corresponding unified TCI mechanism for the mTRP scenarios.

In the Rel-17 unified TCI for sTRP (single transmission and reception point) scenario, a network device uses radio resource control (RRC) signaling to configure M (M≥1) TCI states for a terminal equipment, uses a media access control (MAC) control element (CE) to activate N (1≤N≤M) TCI states in M TCI states, and uses downlink control information (DCI) to indicate L (1≤L≤N) TCI states in N TCI states. A TCI state (TCI for short) may include or correspond to one or two source reference signals (source RSs). The source reference signal may provide Quasi Co-Location (QCL) information for downlink reception, which is called a downlink source reference signal. The source reference signal may provide a reference for the uplink transmission spatial filter (UL TX spatial filter), which is called an uplink source reference signal.

The source reference signal may provide beam information for destination channel/signal. For example, a beam used by a terminal equipment to receive the destination channel/signal is the same as a beam used to receive the downlink source reference signal. For another example, the beam used by the terminal equipment to transmit the destination channel/signal is the same as the beam used to transmit the uplink source reference signal. For another example, the beam used by the terminal equipment to transmit the destination channel/signal is reciprocal with the beam used to receive the downlink source reference signal, that is, the beam in the opposite direction is used.

Therefore, an indication or update of the TCI state actually includes an indication or update of the beam used by the terminal equipment. The TCI state includes joint TCI state, downlink TCI state and uplink TCI state. The source reference signal of the downlink TCI state is a downlink source reference signal, the source reference signal of the uplink TCI state is an uplink source reference signal, and the source reference of the joint TCI state is both a downlink source reference signal and an uplink source reference signal. The joint TCI state acts on both a downlink (a receiving beam) beam and an uplink beam (a transmitting beam). In other words, the downlink beam and the uplink beam use the same beam, but are in opposite beam directions, that is, there is reciprocity between the uplink beam and the downlink beam. The downlink TCI state acts only on the downlink beam. The uplink TCI state acts only on the uplink beam. The uplink beam is also called an uplink transmitting spatial filter. A TCI field may indicate joint TCI state (joint DL/UL TCI), or aTCI field may indicate a separate TCI state (separate DL/UL TCI), that is, the downlink TCI state and/or the uplink TCI state. Indicating joint TCI states or indicating separate TCI states may be configured using RRC signaling.

For the unified TCI of Rel-17, for the joint TCI state, a TCI field indicates a joint TCI state (equivalent to indicating both a downlink TCI state and an uplink TCI state); for the separate TCI state, a TCI field indicates a downlink TCI state, or an uplink TCI state, or a downlink TCI state and an uplink TCI state.

At present, the standardization work of Rel-18 has not yet begun, but the unified TCI of mTRP has been identified as one of the project contents of Rel-18. That is, 3GPP will standardize the unified TCI of mTRP at Rel-18. Functionally, the unified TCI for mTRP needs to be able to indicate both the TCI states (multiple TCI states) of multiple TRPs (two or more TRPs) and the TCI state (one TCI state) of one TRP. However, in the scenario of mTRP, when a TCI state is indicated, there may be ambiguity as regards the terminal equipment performs uplink transmission specifically for which TRP (i.e., determining transmission parameters based on which SRS resource set), resulting in uplink transmission failure, and thus affecting the overall performance of the system.

To address at least one of the above problems, embodiments of the present application provide signal transmitting and receiving apparatus and method. In this way, it is possible to avoid the ambiguity for the terminal equipment as regards an uplink transmission parameter for which TRP is used (i.e., determining the transmission parameters based on which SRS resource set), so that the throughput or reliability of the uplink transmission can be ensured by using the appropriate uplink transmission parameter.

According to another aspect of the embodiments of the present application, there is provided with a signal transmitting method, wherein the terminal equipment is configured with multiple SRS resource sets, the method including:
receiving, by the terminal equipment, TCI state indication information, the TCI state indication information indicating at least one TCI state;
determining, among the multiple SRS resource sets, an SRS resource set associated with an indicated TCI state; and
performing uplink signal transmission by using a parameter associated with the SRS resource set associated with the TCI state and/or a parameter associated with the TCI state.

According to another aspect of the embodiments of the present application, there is provided with a signal receiving method, applied to a network device, the method including:
configuring multiple SRS resource sets;
transmitting TCI state indication information, the TCI state indication information indicating at least one TCI state; wherein at least one of the multiple SRS resource sets is associated with the TCI state;
receiving an uplink signal transmitted by a terminal equipment, wherein the terminal equipment transmits the uplink signal by using a parameter associated with the SRS resource set associated with the TCI state and/or a parameter associated with the TCI state.

According to another aspect of the embodiments of the present application, there is provided with a signal transmitting apparatus, the signal transmitting apparatus including:
a receiving unit configured to receive TCI state indication information, the TCI state indication information indicating at least one TCI state;
a determining unit configured to determine an SRS resource set associated with an indicated TCI state in configured multiple SRS resource sets; and
a transmitting unit configured to perform uplink transmission by using a parameter associated with the SRS resource set associated with the TCI state and/or a parameter associated with the TCI state.

According to another aspect of the embodiments of the present application, there is provided with a signal receiving apparatus, wherein the signal receiving apparatus includes:
a configuring unit configured to configure multiple SRS resource sets;
a transmitting unit configured to transmit TCI state indication information, the TCI state indication information indicating at least one TCI state; and
a receiving unit configured to receive an uplink signal transmitted by a terminal equipment, wherein the terminal equipment transmits the uplink signal by using a parameter associated with the SRS resource set associated with the TCI state and/or a parameter associated with the TCI state.

One of the beneficial effects of the embodiments of the present application is in: the terminal equipment receives TCI state indication information, the TCI state indication information indicating at least one TCI state; determines, among multiple SRS resource sets, an SRS resource set associated with an indicated TCI state; and performs uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission can be ensured.

With reference to the specification and drawings below, a specific embodiment of the present application is disclosed in detail, which specifies the manner in which the principle of the present application can be adopted. It should be understood that, the scope of the embodiment of the present application is not limited. Within the scope of the clause of the appended claims, the embodiment of the present application includes many variations, modifications and equivalents.

The features described and/or shown for one embodiment can be used in one or more other embodiments in the same or similar manner, can be combined with the features in other embodiments or replace the features in other embodiments.

It should be emphasized that, the term "include/contain" refers to, when being used in the text, existence of features, parts, steps or assemblies, without exclusion of existence or attachment of one or more other features, parts, steps or assemblies.

### Brief Description of the Drawings

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in the embodiments of the present application;
FIG. 2 is a schematic diagram of the scenario of the embodiments of the present application;
FIG. 3 is a schematic diagram of a signal transmitting method in the embodiments of the present application;
FIG. 4 is a schematic diagram of uplink signal transmission by the terminal equipment in the embodiments of the present application;
FIG. 5 is a schematic diagram of determining the SRS resource set associated with the TCI state in the embodiments of the present application;
FIG. 6 is another schematic diagram of determining the SRS resource set associated with the TCI state in the embodiments of the present application;
FIG. 7 is a schematic diagram of scheduling or not scheduling downlink assignment/uplink assignment in the embodiments of the present application;
FIG. 8 is a schematic diagram of determining the associated SRS resource set based on an uplink source reference signal in the embodiments of the present application;
FIG. 9 is a schematic diagram of indicating the SRS resource set associated with the TCI state in the embodiments of the present application;
FIG. 10 is a schematic diagram of the unified TCI state activated/deactivated by MAC CE in the embodiments of the present application;
FIG. 11 is another schematic diagram of the unified TCI state activated/deactivated by MAC CE in the embodiments of the present application;
FIG. 12 is a schematic diagram of PUSCH repeated transmission in the embodiments of the present application;
FIG. 13 is another schematic diagram of PUSCH repeated transmission in the embodiments of the present application;
FIG. 14 is a schematic diagram of a signal receiving method in the embodiments of the present application;
FIG. 15 is a schematic diagram of a signal transmitting apparatus in the embodiments of the present application;
FIG. 16 is a schematic diagram of a signal receiving apparatus in the embodiments of the present application;
FIG. 17 is a schematic diagram of composition of the network device in the embodiments of the present application;
FIG. 18 is a schematic diagram of a terminal equipment in the embodiments of the present application.

### Detailed Description

With reference to the drawings, the foregoing and other features of the present application will become apparent through the following description. The Description and drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In the embodiment of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), etc., and/or other communication protocols currently known or to be developed in the future.

In the embodiment of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

Wherein the base station may include, but is not limited to, a node B (NodeB or NB), an evolution node B (eNodeB or eNB), 5G base station (gNB), etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" can refer to a base station and/or its coverage area, depending on the context in which the term is used.

In the embodiment of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), a station, etc.

Wherein the terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

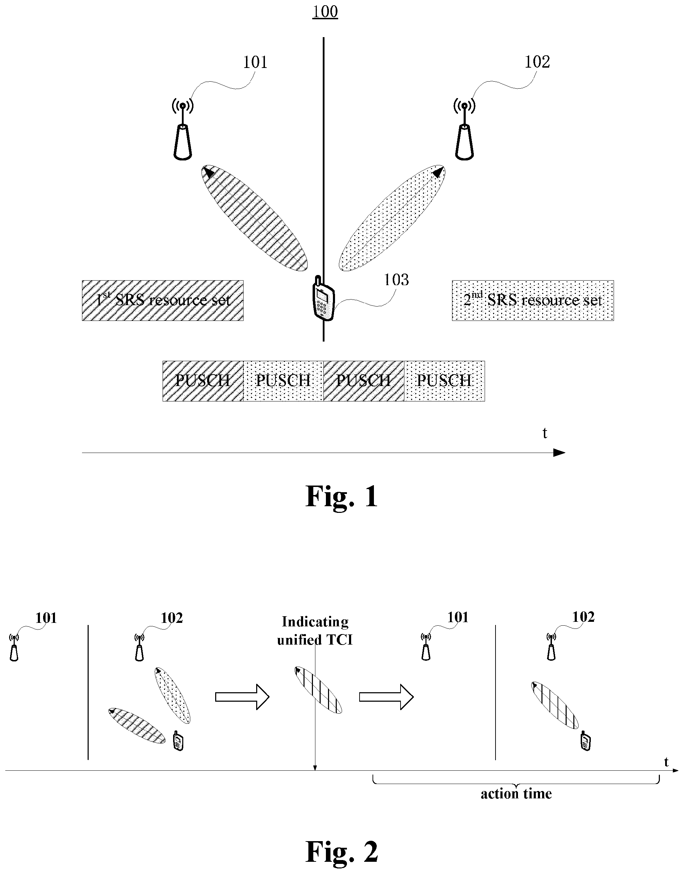

FIG. 1 is a schematic diagram of a communication system in the embodiments of the present application, schematically illustrating the case of the terminal equipment and the network device as examples. As shown in FIG. 1, the communication system 100 may include a first TRP 101, a second TRP 102, and a terminal equipment 103. The first TRP 101 and the second TRP 102 may be network devices. For simplicity, FIG. 1 illustrates only two network devices and one terminal equipment as examples, but which is not limited in the embodiments of the present application.

In the embodiments of the present application, existing services or services that may be implemented in the future and may be transmitted between the first TRP 101, the second TRP 102, and the terminal equipment 103. For example, these services may include, but are not limited to, enhanced Mobile Broadband (eMBB), massive Machine Type Communication (mMTC), and Ultra-Reliable and Low-Latency Communication (URLLC), and etc.

Rel-16 standardizes mTRP-based PDSCH transmission, and Rel-17 standardizes mTRP-based PDCCH, PUSCH, PUCCH transmission. mTRP transmission includes sDCI (single DCI)-based mTRP transmission and mDCI (multiple DCI)-based mTRP transmission. For sDCI-based mTRP, a DCI schedules the uplink and downlink transmission of two TRPs, which is more applicable to the case where the backhaul between the TRPs is ideal. For mDCI-based mTRP, two TRPs use two DCIs to respectively schedule the uplink and downlink transmission of their respective TRPs, which is more applicable to the case wherein the backhaul between the TRPs is not very ideal.

However, in an mTRP scenario, when being indicated by the unified TCI, the unified TCI may indicate both the TCI states of multiple TRPs and the TCI state of one TRP.

Taking the terminal equipment 103 performing PUSCH transmission in mTRP scenario as an example, as shown in FIG. 1, the terminal equipment 103 transmits PUSCH in a PUSCH repetition manner. For example, the terminal equipment 103 transmits PUSCH to the first TRP 101 in a time slot 1, and transmits PUSCH to the second TRP 102 in a time slot 2, and so on.

In the scenario of mTRP, for example, the terminal equipment is configured with two SRS resource sets. For example, the terminal equipment 103 is configured with a 1st SRS resource set corresponding to the first TRP 101; the terminal equipment 103 is configured with a 2nd SRS resource set corresponding to the second TRP 102.

Due to geographical difference between the first TRP 101 and the second TRP 102, the terminal equipment may transmit PUSCH to the first TRP 101 and/or the second TRP 102 based on different transmission parameters such as precoded matrices, SRIs (SRS resource indicator), power control parameters, etc. In addition, the terminal equipment obtains transmission parameters for the first TRP 101 and the second TRP 102 based on the 1st SRS resource set and the 2nd SRS resource set.

Taking the transmission parameter being the SRI (SRS resource indicator) as an example, for a dynamic UL grant, two SRI fields in the DCI respectively indicate the SRS resources in the two SRS resource sets; for configured grants, two SRIs are configured by the RRC to two SRS resource sets. Therefore, the terminal equipment needs to know mapping relationship between PUSCH repetition and the SRS resource set, that is, to know each PUSCH repetition should be transmitted based on which SRS resource set.

In addition, for the unified TCI of mTRP, the TCI field may indicate two uplink TCI states or joint TCI states, or one uplink TCI state or joint TCI state. When the terminal equipment is configured with two SRS resource sets, but the TCI field indicates only one uplink TCI state or joint TCI state, the terminal equipment cannot know uplink transmission should be performed based on which SRS resource set.

Because SRS resources are associated with SRS resource sets, the terminal equipment may not know transmission is performed based on which SRS resource. Because the antenna, precoding matrix, number of layers, power control parameters and other information used for uplink transmission are determined based on the SRS resource set or SRS resource, the data rate (throughput) or reliability of uplink transmission will be compromised if the terminal equipment cannot know transmission is performed based on which SRS resource. This is schematically illustrated by the drawing below.

FIG. 2 is a schematic diagram of the scenario of the embodiments of the present application. As shown in FIG. 2, the terminal equipment 103 is configured with two SRS resource sets and, at the time T, the terminal equipment 103 is indicated with a TCI state.

Although the terminal equipment 103 may know the corresponding uplink transmitting beam based on the indicated TCI state, the terminal equipment 103 does not know which TRP (SRS resource set) the uplink beam corresponds to. However, the SRS resource indicator (SRI) and Precoding Matrix Indicator (PMI) used by the terminal equipment 103 for the two TRPs are different, if the terminal equipment 103 uses the SRI and PMI that should be used for the first TRP101 to transmit uplink signals to the second TRP102, the uplink signal transmission will fail, and vice versa.

To address at least one of the above problems, embodiments of the present application provide signal transmitting and receiving apparatus and method when unified TCI is indicated using DCI for a multi-TRP scenario.

### Embodiments of First Aspect

The embodiments of the present application provide a signal transmission method, applied to a terminal equipment side, wherein the terminal equipment is configured with multiple SRS resource sets.

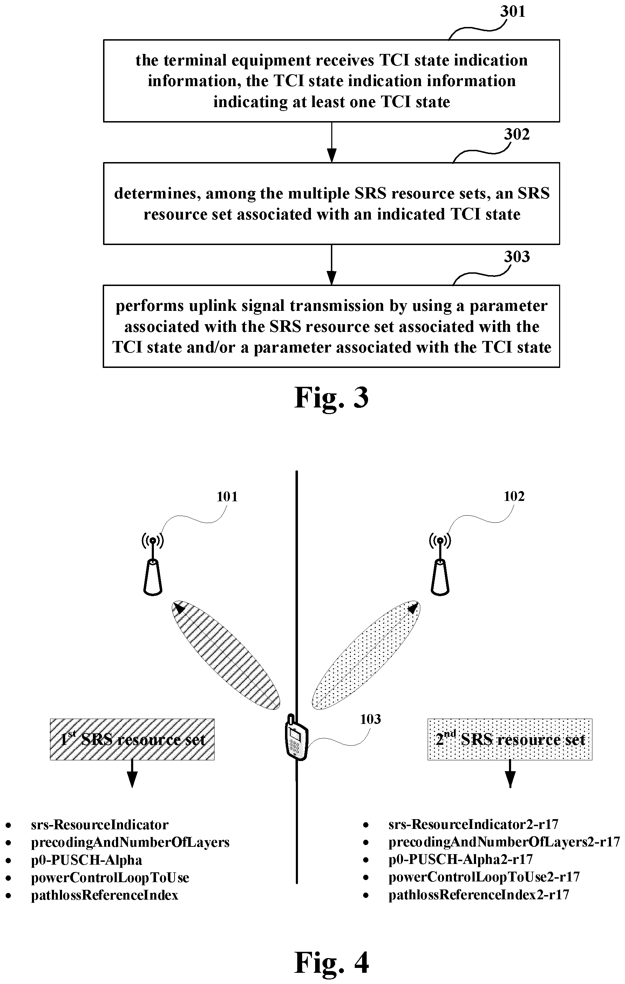

FIG. 3 is a schematic diagram of a signal transmitting method in the embodiments of the present application. As shown in FIG. 3, the method includes:
301, the terminal equipment receives TCI state indication information, the TCI state indication information indicating at least one TCI state;
302, the terminal equipment determines, among the multiple SRS resource sets, an SRS resource set associated with an indicated TCI state; and
303, the terminal equipment performs uplink signal transmission by using a parameter associated with the SRS resource set associated with the TCI state and/or a parameter associated with the TCI state.

It is worth noting that FIG. 3 above only schematically illustrates the embodiment of the present application, taking a terminal equipment as an example, but the present application is not limited to this. For example, the order of execution between operations may be adjusted appropriately, and some other operations may be added or reduced. In addition, the objects of the above operations may also be adjusted. Those skilled in the art may make appropriate variations in accordance with the above contents, and which is not limited to the disclosure of FIG. 3 above.

In some embodiments, the terms "TRP" and "SRS resource set" may be interchangeable. The terms "TRP" and "CSI-RS resource set" may be interchangeable. The terms "correspond", "associate", and "include" are interchangeable, and the terms "uplink TCI state" and "joint TCI state" may be interchangeable. The terms "PUSCH", "PUSCH transmission" and "PUSCH transmitting" may be interchangeable; the embodiments of the present application are not limited to this.

Therefore, the terminal equipment receives TCI state indication information, the TCI state indication information indicating at least one TCI state; determines, among multiple SRS resource sets, an SRS resource set associated with an indicated TCI state; and performs uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission can be ensured.

Hereinafter indication of at least one TCI state in 301 is described.

In some embodiments, the TCI state indication information is carried by a TCI field in a first DCI format. For example, the first DCI format is DCI format 1_1 or DCI format 1_2.

In some embodiments, the TCI state indication information indicates uplink TCI state and/or downlink TCI state; or the TCI state indication information indicates the joint TCI state used to indicate uplink TCI state and downlink TCI state.

In some embodiments, the TCI state indication information indicates at least one of the following TCI states:
a joint TCI state;
two joint TCI states;
two downlink TCI states and two uplink TCI states;
one downlink TCI state and one uplink TCI state;
two downlink TCI states and one uplink TCI state;
two uplink TCI states and one downlink TCI state;
two downlink TCI states;
two uplink TCI states;
one downlink TCI state; or
one uplink TCI state.

In some embodiments, one or more TCI states are indicated by a transmission configuration indication (TCI) field of the DCI format 1_1 or the DCI format 1_2. The DCI format 1_1 or the DCI format 1_2 may schedule downlink data, called DCI format 1_1/1_2 with DL assignment, or, the DCI format 1_1 or the DCI format 1_2 may not schedule downlink data, called DCI format 1_1/1_2 without DL assignment (specifically indicating the unified TCI).

In some embodiments, the terminal equipment determines the SRS resource set associated with the TCI state in at least one of the following cases:
the terminal equipment is configured with two SRS resource sets, for example, the network device performs configuration by the RRC signaling;
DCI format 1_1/1_2 with/without DL assignment indicates transmission configuration indication (TCI) state indication information, and the TCI state indication information indicates an uplink TCI state (UL-TCIState) or a joint TCI state (DLorJoint-TCIState);
during the action time of one uplink TCI state or the joint TCI state.

In some embodiments, for example, if the terminal equipment is configured with two SRS resource sets, in the two SRS resource sets, the i-th SRS resource set is associated with the i-th panel, for example, i = 1, 2; the i-th SRS resource set is associated with the i-th uplink TCI state (UL-TCI State) or the i-th joint TCI state (DLorJoint-TCIState), for example, i = 1, 2; in some embodiments, the i-th set of power control parameters are determined based on the i-th uplink TCI state (UL-TCI State) or the i-th joint TCI state (DLorJoint-TCIState), for example, i = 1, 2; in some embodiments, the i-th set of power control parameters are determined based on the SRI field associated with the i-th SRS resource set, for example, i = 1, 2.

In some embodiments, the SRS resource set is associated with at least one of the following signals/channels:
physical uplink shared channel (PUSCH) based on dynamic grant, for example, PUSCH scheduled based on DCI format 0_1 or DCI format 0_2; in some embodiments, PUSCH transmission based on dynamic grant is multi-TRP (mTRP) PUSCH transmission based on single DCI (sDCI), for example, scheduling PUSCH transmission for multiple TRPs by using a single DCI;
PUSCH based on Type 1 configured grant, for example, uplink transmission grant is provided by the resource management layer (RRC), and the terminal equipment stores the configuration and uses it as a grant configuration;
PUSCH based on Type 2 configured grant, for example, uplink transmission grant is provided by the resource management layer (RRC), and the configuration is stored or cleared according to the indication of activation or deactivation of the configuration by the physical downlink control channel (PDCCH);
a periodic SRS (Periodic SRS);
a semi-persistent sounding reference signal (SRS);
an aperiodic SRS; or
a physical uplink control channel (PUCCH).

In some embodiments, PUSCH transmission based on dynamic grant includes initial transmission and retransmission of PUSCH not based on Type 1/Type 2 configured grant that are scheduled by DCI format 0_1 or DCI format 0_2, and retransmission of PUSCH based on Type 1/Type 2 configured grant that is scheduled by DCI format 0_1 or DCI format 0_2. For example, the specific content of the above signals/channels may be seen by referring to the relevant art, which is not limited in the present application.

Hereinafter how to determine the SRS resource set associated with at least one TCI state indicated by the TCI state indication information in 302 is exemplified.

In some embodiments, the SRS resource set associated with the TCI state is a predetermined SRS resource set among multiple SRS resource sets. For example, the SRS resource set associated with the TCI state is the first SRS resource set among multiple SRS resource sets, and the index of the SRS resource set is, for example, 0.

In some embodiments, the SRS resource set associated with the TCI state is determined based on an indication of the second DCI format that indicates or activates at least one of the following:
physical uplink shared channel (PUSCH) transmission based on a dynamic grant;
PUSCH transmission based on a Type 2 configured grant;
physical uplink control channel (PUCCH) transmission;
semi-persistent sounding reference signal (SRS) transmission; or
aperiodic SRS transmission.

In some embodiments, during the action time of an uplink TCI state or a joint TCI state, the terminal equipment receives the second DCI format, and determines the SRS resource set associated with an uplink TCI state or a joint TCI state based on the second DCI format. In some embodiments, the second DCI format may be DCI format 0_1 or DCI format 0_2, or it may also be called the second DCI format uplink transmission grant.

For example, the SRS resource set associated with the TCI state is indicated by the SRS resource set indicator field in the DCI format 0_1 or DCI format 0_2, or indicated by the SRS request field. For example, in the case where the TCI state indication information indicates an uplink TCI state or a joint TCI state, the SRS resource set indicator field or the SRS request field in the DCI format 0_1 or DCI format 0_2 indicates an SRS resource set associated with the uplink TCI state or the joint TCI state. The DCI format 0_1 or DCI format 0_2 is in the action time of an uplink TCI state or a joint TCI state.

In some embodiments, the second DCI format may be DCI format 1_1 or DCI format 1_2.

For example, the SRS resource set associated with the TCI state is indicated by the SRS request field in the DCI format 1_1 or DCI format 1_2.

In some embodiments, the second DCI format also schedules transmission of uplink data while indicating the SRS resource set associated with the TCI state, called DCI Format 0_1/0_2 with UL allocation; or the second DCI format does not schedule uplink data transmission while indicating the SRS resource set associated with the TCI state, called DCI format 0_1/0_2 without UL allocation. That is, the second DCI format may be either a DCI that reuses scheduling uplink data or a DCI that specifically indicates the SRS resource set associated with the TCI state.

In some embodiments, the SRS resource set associated with the TCI state is determined based on the reference signal. For example, the SRS resource set associated with the TCI state is determined based on the reference signal in an uplink TCI state or a joint TCI state; or the SRS resource set associated with the TCI state is determined based on the reference signal in the PUCCH spatial relation information.

In some embodiments, the SRS resource set associated with the TCI state is determined based on the indication of the first DCI format, which may be DCI format 1_1 or DCI format 1_2.

For example, the SRS resource set associated with the TCI state is indicated by an unused field in the DCI format 1_1 or DCI format 1_2; and/or, the SRS resource set associated with the TCI state is indicated by a new field in the DCI format 1_1 or DCI format 1_2; and/or, the SRS resource set associated with the TCI state is indicated by a TCI field in the DCI format 1_1 or DCI format 1_2.

In some embodiments, the above indication methods of the SRS resource set associated with the TCI state may be used in conjunction. For example, the SRS resource set associated with the TCI state is indicated jointly by the first DCI format and the second DCI format. For example, at least one of the SRS resource set indicator field, the SRS request field, the PUCCH resource indication field in the second DCI format, and the TCI field, the unused field, or the new field in the first DCI format jointly indicate the SRS resource set. For example, in the case where the SRS resource set associated with the TCI state is indicated by a TCI field of DCI format 1_1 or DCI format 1_2, the SRS resource set associated with the TCI state determined based on at least one of the SRS resource set indicator field, the SRS request field, the PUCCH resource indication field is the same as the SRS resource set associated with the TCI state indicated by the TCI field.

In some embodiments, the SRS resource set associated with the TCI state may be determined in at least one of the following ways: being determined based on a predetermined SRS resource set in multiple SRS resource sets, being determined based on an indication in the second DCI format, or being determined based on a reference signal.

For example, in the case where the second DCI format is received before the SRS resource set associated with the TCI state is determined, the SRS resource set associated with the TCI state is indicated by the SRS resource set indicator field or the SRS request field in the second DCI format that is received in the latest time; in the case where the second DCI format is not received before the SRS resource set associated with the TCI state is determined, the SRS resource set associated with the TCI state is the first SRS resource set among the multiple SRS resource sets.

In some embodiments, the SRS resource set associated with the TCI state may be determined in at least one of the following ways: being determined based on indication of the second DCI format, being determined based on the reference signal, or being determined based on the first DCI format.

In addition, other ways of jointly determining the SRS resource set associated with the TCI state are not listed in the present application.

Hereinafter uplink signal transmission in 303 is illustrated.

In some embodiments, after the terminal equipment determines the SRS resource set associated with the TCI state in multiple SRS resource sets, it needs to further determine the parameters associated with the SRS resource set associated with the TCI state and/or the parameters associated with the TCI state.

In some embodiments, the parameters associated with the SRS resource set associated with the TCI state include at least one of the following: SRS resource indicator (SRI), Precoding Matrix Indicator (PMI), number of layers, number of antennas, antenna index, or power control parameters; and in some embodiments, the parameters associated with the TCI state include power control parameters.

In some embodiments, the power control parameters include at least one of the target receiving power (P0), path loss compensation factor (alpha), path loss reference signal (PL-RS, Pathloss-Reference signal) or a closed loop index.

Hereinafter uplink signal transmission performed by the terminal equipment using the parameters associated with the SRS resource set associated with the TCI state or the parameters associated with TCI state is exemplified.

FIG. 4 is a schematic diagram of uplink signal transmission by the terminal equipment in the embodiments of the present application.

As shown in FIG. 4, using the PUSCH based on Type 1 configured grant as an example, the network device configures the 1st SRS resource set corresponding to the first TRP101 for the terminal equipment 103; and configures the 2nd SRS resource set corresponding to the second TRP102 for the terminal equipment 103.

In some embodiments, in the RRC configuration of PUSCH based on Type 1 configured grant, the SRI, PMI, number of layers, number of antennas, antenna index and power control parameters associated with the 1st SRS resource set and the 2nd SRS resource set are independent. For example, the associated SRI, PMI, number of layers, number of antennas, antenna index, and power control parameters are configured for the 1st SRS resource set and 2nd SRS resource set respectively.

For example, in the specific configuration process, SRI is indicated by the "srs-ResourceIndicator" field, PMI and number of layers are indicated by the "precodingAndNumberOfLayers" field, the target receiving power (P0) and the path loss compensation factor (alpha) are indicated by the "p0-PUSCH-Alpha" field, the closed loop index is indicated by the "powerControlLoopToUse" field, and path loss reference signal (PL-RS) is indicated by the "pathlossReferenceIndex" field.

For example, the parameters configured for the 1st SRS resource set are indicated by the following information:
srs-ResourceIndicator,
precodingAndNumberOfLayers,
p0-PUSCH-Alpha,
powerControlLoopToUse,
pathlossReferenceIndex;

The parameters configured for the 2nd SRS resource set are indicated by the following information:
srs-ResourceIndicator2-r17,
precodingAndNumberOfLayers2-r17,
p0-PUSCH-Alpha2-r17,
powerControlLoopToUse2-r17,
pathlossReferenceIndex2-r17.

In some embodiments, the terminal equipment determines parameters associated with different SRS resource sets based on the configuration of the RRC described above. Further, the terminal equipment determines that the PUSCH based on Type 1 configured grant is associated with the 1st SRS resource set by the preceding embodiments; thus, the terminal equipment transmits the PUSCH of Type 1 configured grant using the above parameters associated with the 1st SRS resource set.

In some embodiments, in the case where the terminal equipment 103 determines one SRS resource set through the above embodiments, the terminal equipment transmits the PUSCH using the first and second parameters.

For example, the first parameter is determined based on a specific SRS resource set and includes at least one of SRI, PMI, or number of layers. The second parameter is determined based on an uplink TCI state or joint TCI state indicated by DCI format 1_1 or DCI format 1_2, and the second parameter includes power control parameters.

Description is made still by taking PUSCH based on Type 1 configured grant as an example. The terminal equipment uses the SRI, PMI, and number of layers associated with the 1st SRS resource set, that is, the first parameter, as described before. In addition, the TCI field of DCI format 1_1 or DCI format 1_2 indicates an uplink TCI state or joint TCI state. The uplink TCI state or joint TCI state includes or is associated with at least one of the path loss reference signal (PL-RS), the target receiving power (P0), the path loss compensation factor (alpha), or the closedLoopIndex, so that the terminal equipment may determine the power control parameter based on the TCI state, i.e., the second parameter. The terminal equipment determines the first parameter and the second parameter, and then transmits the PUSCH based on the Type 1 configured grant on the basis of the first parameter and the second parameter.

Hereinafter the different cases for TCI indication are exemplified.

In some embodiments, in the case where the number of uplink TCI states (or joint TCI state) indicated by the TCI field becomes one, the SRS resource set is determined according to the above embodiments.

For example, in the case where the TCI state indication information indicates one uplink TCI state or one joint TCI state, among multiple SRS resource sets, an SRS resource set associated with the one uplink TCI state or the one joint TCI state is determined according to the above embodiments. For example, before the TCI state indication information indicates an uplink TCI state or a joint TCI state, the TCI state indication information indicated two uplink TCI states or two joint TCI states.

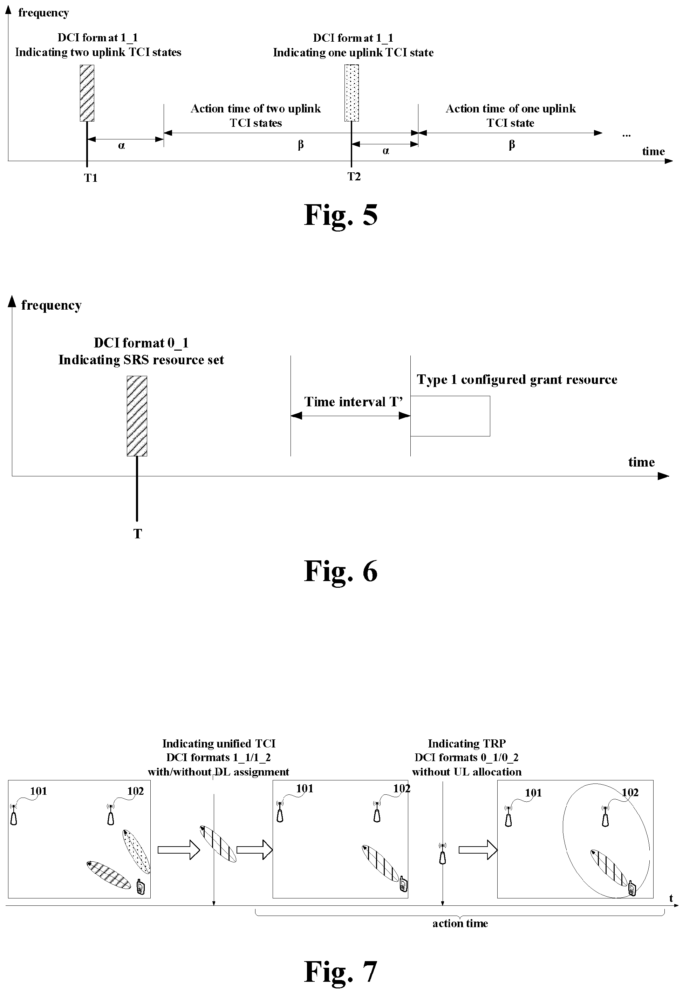

This is schematically illustrated in FIG. 5. FIG. 5 is a schematic diagram of determining the SRS resource set associated with the TCI state in the embodiments of the present application.

For example, the TCI field in the first DCI format indicates two uplink TCI states at time T1, and after a period of time, such as after time T2, the TCI field indicates one uplink TCI state, that is, after the TCI field indicates one uplink TCI state, the terminal equipment needs to determine the SRS resource set associated with the one uplink TCI state.

As shown in FIG. 5, after the first DCI format indicates the TCI state, the action time of the indicated TCI state starts from a period of time after transmitting the DCI. For example, the time T1, T2 are the time indicating the TCI state, and β is the action time of the TCI state. As shown in FIG. 5, T1+α is the starting action time of the two uplink TCI states indicated; T2+a is the starting action time of the one uplink TCI state indicated.

Thus, the terminal equipment determines an SRS resource set associated with one uplink TCI state based on the above embodiments within the action time β beginning at T2+a.

In some embodiments, the TCI indicated by the first DCI format may be a case where the downlink TCI and the uplink TCI are indicated separately (i.e., separate DL/UL TCI). For example, the value of the *"unifiedtci-StateType"* field in the RRC configuration is SeparateULDL. In some embodiments, the TCI indicated by the first DCI format may be a case where the downlink TCI and the uplink TCI are indicated jointly (i.e., joint DL/UL TCI). For example, the *"unifiedtci-StateType"* field in the RRC configuration is JointULDL.

Hereinafter determination of the SRS resource set associated with the TCI state in different ways is exemplified.

In some embodiments, the SRS resource set associated with the TCI state is a first SRS resource set in the multiple SRS resource sets.

For example, the terminal equipment is configured with two SRS resource sets, in the case where the number of uplink TCI states indicated by the TCI field is one (similar to the above embodiment), the PUSCH based on Type 1 configured grant is considered to be associated with the 1st SRS resource set.

For example, the DCI format 0_0 schedules PUSCH transmission based on dynamic grant or activates PUSCH transmission based on Type 2 configured grant, and PUSCH is considered to be associated with the 1st SRS resource set. This is because, as fallback DCI, the DCI format 0_0 should contain as few fields as possible, such as not contains fields indicating the SRS resource set associated with the TCI state, thus a predetermined SRS resource set is used, that is, it is default that the SRS resource set associated with the TCI state is the 1st SRS resource set of multiple SRS resource sets.

In some embodiments, the SRS resource set indicator field of the DCI format 0_1 or DCI format 0_2 indicates only one SRS resource set, that is, does not indicate more than one SRS resource set. For example, the TCI field indicates one uplink TCI state, and the SRS resource set indicator field indicates only one SRS resource set within the action time of one uplink TCI state.

Table 1 schematically illustrates usage of the SRS resource set indicator field. In the case where the terminal equipment is configured with two SRS resource sets, the bit width of the SRS resource set indicator field is 2 bits, and the DCI format 0_1 or DCI format 0_2 consists of two SRS resource indicator (SRI) fields (for example, called "SRS resource indicator field" and "second SRS resource indicator field", respectively) and two precoding fields (for example, called "precoding information and number of layers field" and "second precoding information field", respectively). For the SRS resource set indicator field, the 2-bit value may be "00" or "01". "00" (corresponding to the value 0) indicates the 1st SRS resource set, and "01" (corresponding to the value 1) indicates the 2nd SRS resource set. "10" and " 11" are reserved, that is, not used.

**Table 1 SRS resource set indication**

| Bit field | SRS resource set indication |
|---|---|
| 00 | The SRS resource indicator (SRI) field and the Precoding information and number of layers field are associated with the 1st SRS resource set; the Second SRS resource indicator field and the Second Precoding information field are reserved. |
| 01 | The SRS resource indicator field and the Precoding information and number of |
| | layers field are associated with the 2nd SRS resource set; the Second SRS resource indicator field and the Second Precoding information field are reserved. |

The corresponding English expression is:

**Table 1 SRS resource set indication**

| Bit field | SRS resource set indication |
|---|---|
| 00 | SRS resource indicator field and Precoding information and number of layers field are associated with the first SRS resource set; |
| | Second SRS resource indicator field and Second Precoding information field are reserved. |
| 01 | SRS resource indicator field and Precoding information and number of layers field are associated with the second SRS resource set; |
| | Second SRS resource indicator field and Second Precoding information field are reserved. |

In some embodiments, the SRS resource set is indicated by the SRS resource set indication field in the DCI format 0_1 or DCI format 0_2. For example, the terminal equipment is configured with two SRS resource sets, in the case where the number of uplink TCI states indicated by the TCI field is one, the PUSCH based on Type 1 configured grant is associated with the SRS resource set indicated by the SRS resource set indication field in the DCI format 0_1 or DCI format 0_2 that is received in the latest time. The PUSCH based on Type 1 configured grant is within the same TCI action time as the DCI format 0_1 or DCI format 0_2 that is received in the latest time.

This is schematically illustrated in FIG. 6. FIG. 6 is another schematic diagram of determining the SRS resource set associated with the TCI state in the embodiments of the present application.

The DCI format 0_1 is the DCI indicating the SRS resource set received in the latest time by the terminal equipment before a time interval T' from the Type 1 configured grant resource, and transmission of PUSCH on the Type 1 configured grant resource is associated with the SRS resource set indicated by the DCI format 0_1. The time interval T' here may include, for example, the necessary DCI processing time for the terminal equipment and the PUSCH preparation time. The DCI format 0_1 and the PUSCH on the Type 1 configured grant resource are within the same TCI action time.

In some embodiments, if the terminal equipment receives the DCI format 0_1 or DCI format 0_2 before determining the SRS resource set, the SRS resource set is indicated by the SRS resource set indicator field of the DCI format 0_1 or DCI format 0_2 that is received in the latest time; if the terminal equipment does not receive the DCI format 0_1 or DCI format 0_2 before determining the SRS resource set, the SRS resource set is the 1st SRS resource set.

In some embodiments, the DCI format 0_1 or DCI format 0_2 indicating the SRS resource set may not schedule uplink data transmission, but may be used only to indicate the SRS resource set.

This is schematically illustrated in FIG. 7. FIG. 7 is a schematic diagram of scheduling or not scheduling downlink assignment/uplink assignment in the embodiments of the present application.

For example, if two uplink TCI states were previously indicated by the TCI field in the DCI format 1_1 or DCI format 1_2 for the terminal equipment, and then one uplink TCI state was indicated by the TCI field in the DCI format 1_1 or DCI format 1_2 for the terminal equipment, at that time although the terminal equipment knows the beam direction (TCI state), it does not know which SRS resource set (or TRP) this TCI state is associated with. To indicate the SRS resource set, although the terminal equipment has no uplink data to transmit, the network device may still transmit the DCI format 0_1 or DCI format 0_2, uses its SRS resource set indicator field to indicate which SRS resource set the TCI state is associated with. For example, if the network device indicates the 2nd SRS resource set, the terminal equipment may know that the PUSCH based on the uplink TCI state is to be transmitted to the second TRP 102.

In some embodiments, the SRS resource set is the SRS resource set associated with the uplink source reference signal corresponding to the uplink TCI state.

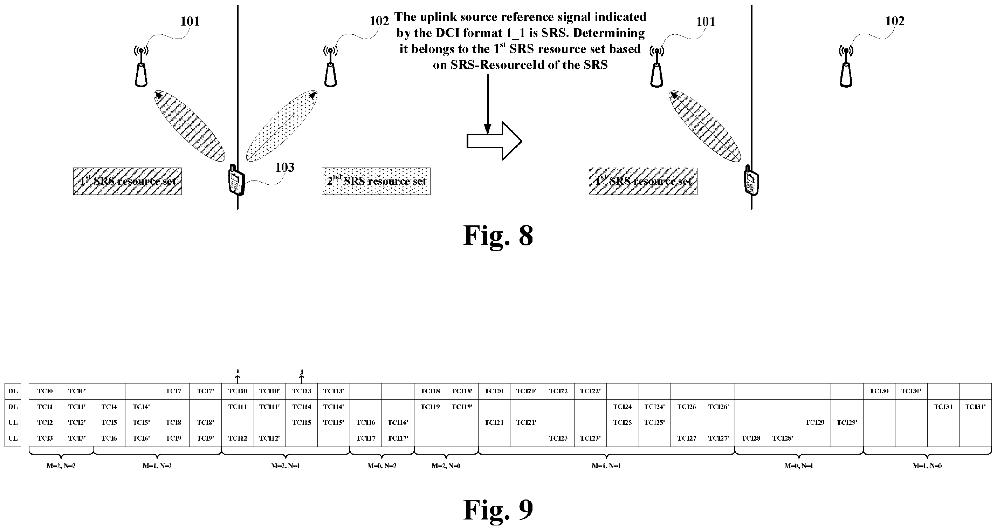

This is schematically illustrated in FIG. 8. FIG. 8 is a schematic diagram of determining the SRS resource set associated with the TCI state based on an uplink source reference signal in the embodiments of the present application.

For example, Type 1 configured grant is associated with two SRS resource sets. The number of uplink TCI states indicated by the TCI field in the DCI format 1_1 is 1. The uplink source reference signal corresponding to the indicated uplink TCI state is SRS. The SRS resource is identified by *"SRS-Resourceld".* Because the terminal equipment knows the *"SRS-ResourceId"* of the SRS resource in the SRS resource set, it may determine which SRS resource set the uplink source reference signal belongs to based on the *"SRS-Resourceld"* (i.e., an SRS resource set associated with the TCI state is determined based on the uplink source reference signal corresponding to the uplink TCI state).

In some embodiments, the SRS resource set is an SRS resource set associated with a reference signal in the PUCCH spatial relation information.

For example, the TCI field indicates an uplink TCI state, and the PUCCH resource indicator field of the DCI indicates a PUCCH resource for feedback ACK/NACK. For the PUCCH resource, the RRC IE (Information Element) *"PUCCH-SpatialRelationInfo"* indicates that the reference signal used to determine the spatial relationship of the PUCCH is SRS, the SRS resource is identified by *"SRS-ResourceId",* and the terminal equipment may determine which SRS resource set the SRS belongs to based on the *"SRS-ResourceId"* (i.e., an SRS resource set associated with the TCI state is determined based on the reference signal in PUCCH spatial relation information).

In some embodiments, the PUCCH is PUCCH that is transmitted in the latest time before the SRS resource set is determined. For example, for the PUSCH based on Type 1 configured grant, the SRS resource set associated with the TCI state is determined according to the PUCCH transmitted in the latest time, and the SRS resource set is an SRS resource set associated with the reference signal in the PUCCH spatial relation information.

In some embodiments, the PUCCH resource indication field indicates only the PUCCH resource with one spatial relation information being activated, that is, does not indicate the PUCCH resource with more than one spatial relation information being activated. For example, the TCI field indicates one uplink TCI state, and the PUCCH resource indication field indicates only the PUCCH resource with one spatial relation information being activated, within the action time of one uplink TCI state. In some embodiments, in the case where the terminal equipment has a PUCCH resource with two spatial relation information being activated, the SRS resource set or PUCCH spatial relation information is determined according to the above method.

In some embodiments, the terminal equipment is configured with multiple SRS resource sets, and further, the SRS resource set is indicated by the TCI field in the DCI format 1_1 or DCI format 1_2.

This is schematically illustrated in FIG. 9. FIG. 9 is a schematic diagram of indicating the SRS resource set associated with the TCI state in the embodiments of the present application.

For a TCI field, one TCI codepoint indicates M downlink TCI states and N uplink TCI states, i.e., indicates a certain column in FIG. 9. Two ULs correspond to two SRS resource sets (or two TRPs) respectively. DCI indicates N=1 uplink TCI state and indicates the SRS resource set associated with the TCI state. For example, if the DCI indicates the column i, it indicates the 2nd SRS resource set, and if the DCI indicates the column j, it indicates the 1st SRS resource set, i.e., the column i and the column j may be distinguished.

Alternatively, two DLs correspond to two CSI-RS resource sets (or two TRPs) respectively, and the DCI may also indicate which CSI-RS resource set the M=1 downlink TCI state is associated with.

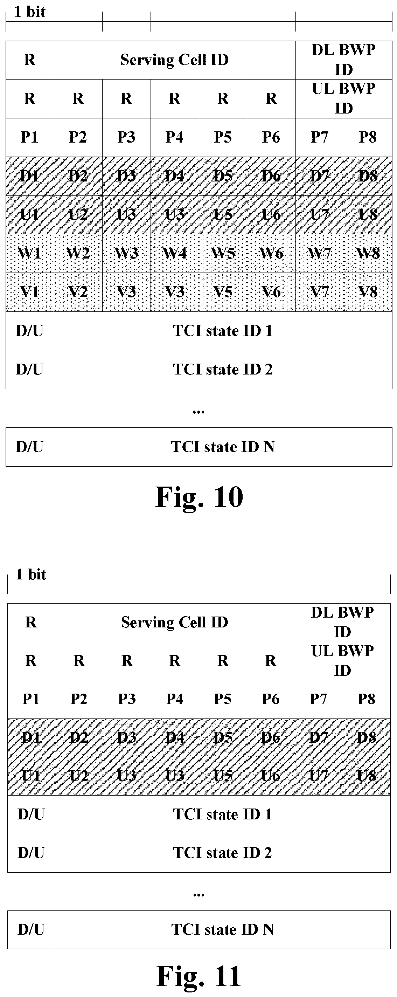

FIG. 10 is a schematic diagram of the unified TCI state activated/deactivated by MAC CE in the embodiments of the present application.

The MAC CE for mTRP activation/deactivation of the unified TCI state is illustrated in Fig. 10. After MAC CE activation, the established mapping relationship between the TCI codepoint and the TCI state includes information about the SRS resource set, and the SRS resource set may be obtained through the TCI codepoint. The MAC CE includes at least one of the fields Pi, Di, Ui, Wi, or Vi, i = 1, 2, ... , 8.

Pi indicates whether the i-th TCI codepoint corresponds to the TCI states in two directions (uplink and downlink TCI states) or the TCI state in one direction (uplink or downlink TCI state). If Pi is 1, it corresponds to the uplink TCI state and the downlink TCI state, such as one of (M=2, N=2), (M=1, N=2), (M=2, N=1), or (M=1, N=1). If Pi is 0, it corresponds to the uplink TCI state or the downlink TCI state, such as one of (M=0, N=2), (M=2, N=0), (M=0, N=1), or (M=1, N=0).

Di indicates whether the number of downlink TCI state (if any) corresponding to the i-th TCI codepoint is 1 or 2. If Di is 1, it corresponds to two downlink TCI states, such as one of (M=2, N=2), (M=2, N=1), or (M=2, N=0). If Di is 0, it corresponds to one downlink TCI state, such as one of (M=1, N=2), (M=1, N=1), or (M=1, N=0).

Ui indicates whether the number of uplink TCI state (if any) corresponding to the i-th TCI codepoint is 1 or 2. If Ui is 1, it corresponds to two uplink TCI states, such as one of (M=0, N=2), (M=1, N=2), or (M=2, N=2). If Ui is 0, it corresponds to one uplink TCI state, such as one of (M=0, N=1), (M=1, N=1), or (M=2, N=1).

Wi indicates which CSI-RS resource set the single downlink TCI state (if any) corresponding to the i-th TCI codepoint is associated with. If Wi is 1, it corresponds to the second CSI-RS resource set. If Wi is 0, it corresponds to the first CSI-RS resource set.

Vi indicates which SRS resource set the single uplink TCI state (if any) corresponding to the i-th TCI codepoint is associated with. If Vi is 1, it corresponds to the second SRS resource set. If Vi is 0, it corresponds to the first SRS resource set.

If the i-th TCI codepoint corresponds to two uplink (downlink) TCI states, then the k-th uplink (downlink) TCI state corresponds to the k-th SRS (CSI-RS) resource set, k = 1, 2. If D/U is 1, it indicates the downlink TCI state or joint TCI state. If D/U is 0, it indicates the uplink TCI state. Alternatively, the MAC CE includes at least one of a field service cell ID, a downlink BWP (bandwidth part) ID, or an uplink BWP ID.

In some embodiments, the TCI field of the DCI format 1_1 or DCI format 1_2 does not indicate the SRS resource set. For example, the TCI field indicates an uplink TCI state, but does not indicate which SRS resource set the TCI state is associated with. In this case, the SRS resource set may be determined in at least one of the following ways: being determined based on a predetermined SRS resource set in multiple SRS resource sets, being determined based on an indication in the second DCI format, or being determined based on a reference signal.

FIG. 11 is another schematic diagram of the unified TCI state activated/deactivated by MAC CE in the embodiments of the present application.

This is schematically illustrated in FIG. 11. The MAC CE for mTRP activation/ deactivation of the unified TCI state includes at least one of the fields Pi, Di, Ui, i = 1, 2, ..., 8. The usage of the fields Pi, Di, and Ui is the same as that in FIG. 10, which will not be repeated. After MAC CE activation, the established mapping relationship between the TCI codepoint and the TCI state does not include information about the SRS resource set, and the TCI codepoint does not indicate the SRS resource set. In this case, the SRS resource set may be determined in at least one of the following ways: being determined based on a predetermined SRS resource set in multiple SRS resource sets, being determined based on an indication in the second DCI format, or being determined based on a reference signal.

In some embodiments, the SRS resource set is determined by an unused field in the DCI format 1_1 or DCI format 1_2. For example, the DCI format 1_1 or DCI format 1_2 is a DCI format that does not schedule downlink data, that is, DCI format 1_1/1_2 without DL assignment. For this DCI format, CS-RNTI (Configured scheduling RNTI) is used to scramble CRC of the DCI, and some fields in the DCI are set to specific values to distinguish the DCI scheduling downlink data. For example, the RV (Redundancy version) field and the MCS field are set to full "1", and the NDI field is set to 0. and the frequency domain resource assignment (FDRA) field is set to full "0" or full "1" depending on different frequency domain resource allocation types. Because there is no downlink data scheduled, some fields in the DCI are not used, such as the HARQ process number field. The HARQ process number field may therefore be used to indicate the 1st SRS resource set or the 2nd SRS resource set.

In some embodiments, the SRS resource set determined based on at least one of the SRS resource set indication field, the SRS request field, the PUCCH resource indication field is the same as the SRS resource set indicated or determined based on the TCI field.

In some embodiments, the terminal equipment determines an SRS resource set in the case where the TCI field of the DCI format 1_1 or DCI format 1_2 indicates an uplink TCI state. The terminal equipment transmits all PUSCH repetitions, where all PUSCH repetitions are associated with the SRS resource set.

For example, the terminal equipment is configured with two SRS resource sets, in the case where the TCI field in the DCI format 1_1 or DCI format 1_2 indicates two uplink TCI states, for PUSCH transmission based on PUSCH repetition, the terminal equipment determines the first PUSCH repetition and the second PUSCH repetition associated with the first SRS resource set and the second SRS resource set, respectively. In the case where the TCI field in the DCI format 1_1 or DCI format 1_2 indicates one uplink TCI state, assuming that the terminal equipment determines that the SRS resource set is the first SRS resource set, the terminal equipment transmits the first PUSCH repetition and the second PUSCH repetition, where all PUSCH repetitions are associated with the first SRS resource set. The PUSCH repetition includes PUSCH repetition Type A and Type B, which may be referred to in TS 38.214 V17.1.0 and is not limited in the present application.

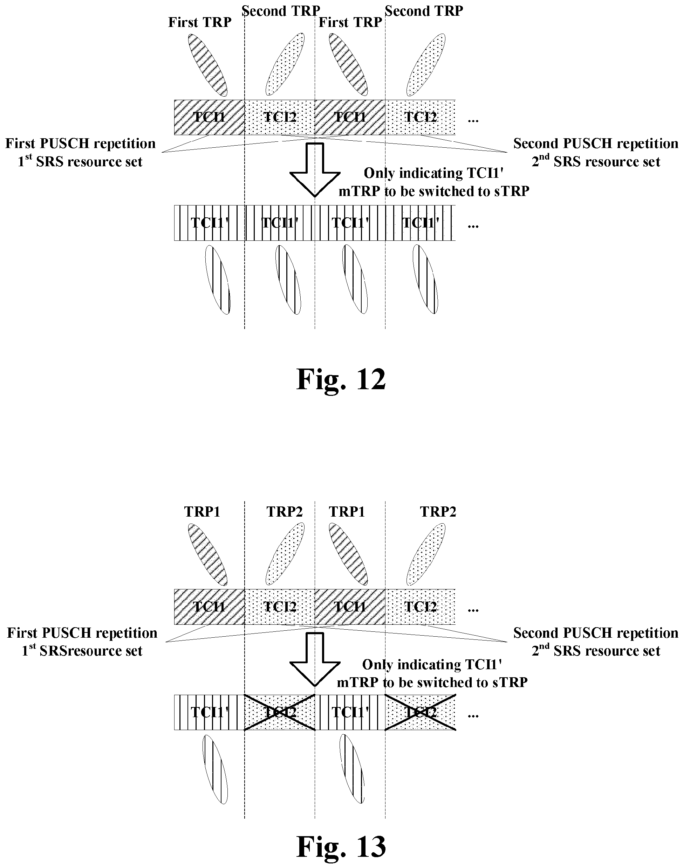

FIG. 12 is a schematic diagram of PUSCH repeated transmission in the embodiments of the present application.

Taking Type 1 configured grant as an example, if the terminal equipment is configured with two SRS resource sets, the first SRS resource set corresponds to the first TRP and the second SRS resource set corresponds to the second TRP. Mapping relationships between different SRS resource sets and the PUSCH repetition are shown in FIG. 12. In the case where the uplink TCI state indicated by the TCI field is TCI1' or changes from TCI1 and TCI2 to TCI1', the terminal equipment determines that TCI1' is associated with the first SRS resource set, the terminal equipment performs transmission on all PUSCH repetitions, the uplink beam direction is determined based on TCI1', all PUSCH repetitions are associated with the first SRS resource set, and the terminal equipment transmits a PUSCH of Type 1 configured grant using the first and second parameters, wherein the first parameter is associated with the first SRS resource set, the first parameter includes at least one of *"srs-ResourceIndicator"* or *"precodingAndNumberOfLayers",* the second parameter is determined based on TCI1', and the second parameter includes at least one of the target receiving power, the path loss compensation factor, the path loss reference signal or the closed loop index. In the case where one SRS resource set is associated with one TCI state, the uplink PUSCH is associated with one SRS resource set, also equivalent to that the PUSCH is associated with one uplink TCI state.

In some embodiments, the terminal equipment determines an SRS resource set in the case where the TCI field of the DCI format 1_1 or DCI format 1_2 indicates an uplink TCI state. The terminal equipment transmits part of the PUSCH repetition, wherein part of the PUSCH repetition is associated with the determined SRS resource set. For example, the terminal equipment is configured with two SRS resource sets, in the case where the TCI field in the DCI format 1_1 or DCI format 1_2 indicates two uplink TCI states, for PUSCH transmission based on PUSCH repetition, the terminal equipment determines the first PUSCH repetition and the second PUSCH repetition associated with the first SRS resource set and the second SRS resource set, respectively. In the case where the TCI field in the DCI format 1_1 or DCI format 1_2 indicates one uplink TCI state, assuming that the terminal equipment determines that the SRS resource set is the first SRS resource set, the terminal equipment transmits only the first PUSCH repetition, where the first PUSCH repetition is associated with the first SRS resource set.

This is schematically illustrated in FIG. 13. FIG. 13 is another schematic diagram of PUSCH repeated transmission in the embodiments of the present application.

The similarities with FIG. 12 will not be repeated. The difference from FIG. 12 is that the terminal equipment performs transmission only on the first PUSCH repetition associated with the first SRS resource set.

In some embodiments, in the case where the TCI field in the DCI format 1_1 or DCI format 1_2 indicates an uplink TCI state, the terminal equipment determines an SRS resource set associated with the one uplink TCI state and transmits only the SRS of the associated SRS resource set.

For example, the terminal equipment is configured with two SRS resource sets, and the terminal equipment transmits two periodic SRSs (or semi-continuous SRSs), where two SRSs belong to two SRS resource sets respectively. The terminal equipment transmits two SRSs in the case where the TCI field of the DCI format 1_1 or DCI format 1_2 indicates two uplink TCI states. In the case where the TCI field in the DCI format 1_1 or DCI format 1_2 indicates one uplink TCI state, assuming that the terminal equipment determines that the SRS resource set is the first SRS resource set, the terminal equipment transmits only the SRS that belongs to the first SRS resource set and does not transmit the SRS that belongs to the second SRS resource set. The SRS described above may be SRS for codebook-based uplink transmission, or non-codebook-based uplink transmission, or antenna switching. This is because, in the case where mTRP is switched to sTRP, the terminal equipment may not transmit SRS to the TRP where no data transmission occurs, that is, there is no need to provide channel measurements for it, thereby reducing the uplink reference signal overhead and avoiding interference with other devices.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment receives TCI state indication information, the TCI state indication information indicating at least one TCI state; determines, among multiple SRS resource sets, an SRS resource set associated with an indicated TCI state; and performs uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission may be ensured.

### Embodiments of Second Aspect

The embodiments of the present application provide a signal receiving method. The embodiments of the present application may be combined with the embodiments of the first aspect or may be implemented separately. The same content as that in the embodiments of the first aspect are not repeated.

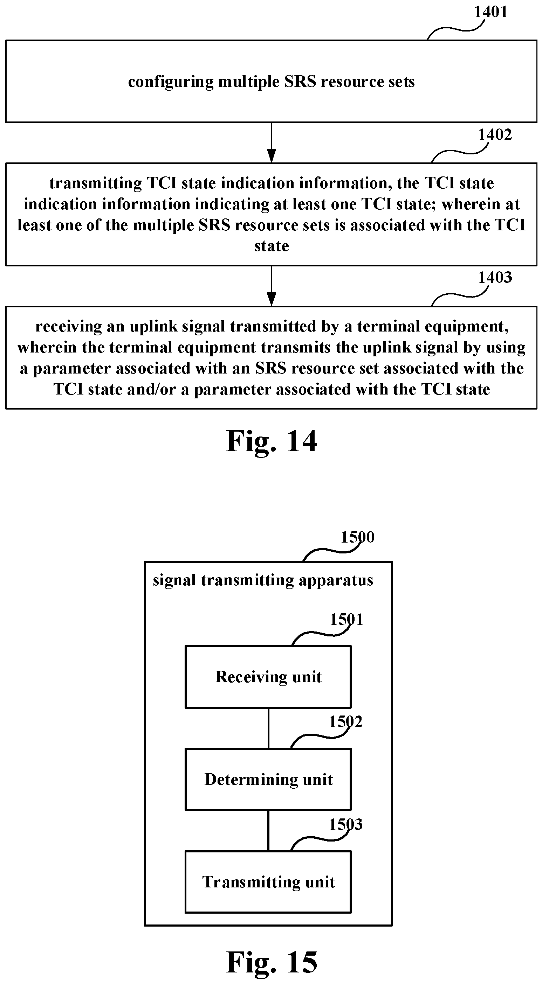

FIG. 14 is a schematic diagram of a signal receiving method in the embodiments of the present application. As shown in FIG. 14, the method includes:
1401, a network device configures multiple SRS resource sets;
1402, the network device transmits TCI state indication information, the TCI state indication information indicating at least one TCI state; wherein at least one of the multiple SRS resource sets is associated with the TCI state;
1403, the network device receives an uplink signal transmitted by a terminal equipment, wherein the terminal equipment transmits the uplink signal by using a parameter associated with an SRS resource set associated with the TCI state and/or a parameter associated with the TCI state.

It is worth noting that FIG. 14 above only schematically illustrates the embodiment of the present application, but the present application is not limited to this. For example, the order of execution between operations can be adjusted appropriately, and some other operations can be added or reduced. Those skilled in the art may make appropriate variations in accordance with the above contents, and which is not limited to the disclosure of FIG. 14 above.

In some embodiments, the TCI state indication information is carried by a TCI field in a first DCI format.

In some embodiments, the TCI state indication information indicates uplink TCI state and/or downlink TCI state; or the TCI state indication information indicates the joint TCI state used to indicate uplink TCI state and downlink TCI state.

In some embodiments, in the case where the TCI state indication information indicates one uplink TCI state or one joint TCI state, among the multiple SRS resource sets, the terminal equipment determines an SRS resource set associated with the one uplink TCI state or the one joint TCI state.

In some embodiments, before the TCI state indication information indicates an uplink TCI state or a joint TCI state, the TCI state indication information indicated two uplink TCI states or two joint TCI states.

In some embodiments, the TCI state indication information indicates at least one of the following TCI states:
a joint TCI state;
two joint TCI states;
two downlink TCI states and two uplink TCI states;
one downlink TCI state and one uplink TCI state;
two downlink TCI states and one uplink TCI state;
two uplink TCI states and one downlink TCI state;
two downlink TCI states;
two uplink TCI states;
one downlink TCI state; or
one uplink TCI state.

In some embodiments, the multiple SRS resource sets are SRS resource sets associated with at least one of the following signals/channels:
a physical uplink shared channel (PUSCH) based on a dynamic grant;
a PUSCH based on a Type 1 configured grant;
a PUSCH based on a Type 2 configured grant;
a periodic SRS (Periodic SRS);
a semi-persistent sounding reference signal (SRS);
an aperiodic SRS; or
a physical uplink control channel (PUCCH).

In some embodiments, the PUSCH and/or the PUCCH based on a dynamic grant is transmission of PUSCH and/or PUCCH based on single DCI (sDCI) scheduling multiple transmission and reception point (multiple TRP, mTRP).

The embodiments above only schematically illustrate the present application, but the present application is not limited to this, and appropriate variations can also be made on the basis of the above embodiments. For example, the above embodiments may be used separately, or one or more of the above embodiments may be combined.

As can be seen from the above embodiment, the terminal equipment receives TCI state indication information, the TCI state indication information indicating at least one TCI state; determines, among multiple SRS resource sets, an SRS resource set associated with an indicated TCI state; and performs uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission may be ensured.

### Embodiments of Third Aspect

The embodiments of the present application provide a signal transmitting apparatus. The apparatus may be, for example, a terminal equipment, or one or more parts or components configured in the terminal equipment, and the same content as the embodiments of the first to second aspects will not be repeated.

FIG. 15 is a schematic diagram of a signal transmitting apparatus in the embodiments of the present application.

As shown in FIG. 15, the signal transmitting apparatus 1500 includes:
a receiving unit 1501 configured to receive TCI state indication information, the TCI state indication information indicating at least one TCI state;
a determining unit 1502 configured to determine an SRS resource set associated with an indicated TCI state in configured multiple SRS resource sets; and
a transmitting unit 1503 configured to perform uplink transmission by using a parameter associated with the SRS resource set associated with the TCI state and/or a parameter associated with the TCI state.

In some embodiments, the TCI state indication information is carried by a TCI field in a first DCI format.

In some embodiments, the TCI state indication information indicates uplink TCI state and/or downlink TCI state; or the TCI state indication information indicates the joint TCI state used to indicate uplink TCI state and downlink TCI state.

In some embodiments, in the case where the TCI state indication information indicates one uplink TCI state or one joint TCI state, among multiple SRS resource sets, the determining unit 1502 determines an SRS resource set associated with the one uplink TCI state or the one joint TCI state.

In some embodiments, before the TCI state indication information indicates an uplink TCI state or a joint TCI state, the TCI state indication information indicated two uplink TCI states or two joint TCI states.

In some embodiments, wherein the TCI state indication information indicates at least one of the following TCI states:
a joint TCI state;
two joint TCI states;
two downlink TCI states and two uplink TCI states;
one downlink TCI state and one uplink TCI state;
two downlink TCI states and one uplink TCI state;
two uplink TCI states and one downlink TCI state;
two downlink TCI states;
two uplink TCI states;
one downlink TCI state; or
one uplink TCI state.

In some embodiments, the determining unit 1502 determines the SRS resource set associated with the TCI state, including:
determining based on a predetermined SRS resource set in the multiple SRS resource sets;
determining based on an indication of a second DCI format;
determining based on a reference signal; or
determining based on an indication of the first DCI format.

In some embodiments, the SRS resource set associated with the TCI state is a first SRS resource set in the multiple SRS resource sets.

In some embodiments, the SRS resource set associated with the TCI state is indicated by an SRS resource set indicator field in the second DCI format; or the SRS resource set associated with the TCI state is indicated by an SRS request field in the second DCI format.

In some embodiments, when the TCI state indication information indicates one uplink TCI state or one joint TCI state, the SRS resource set associated with the TCI state is indicated by the SRS resource set indicator field or the SRS request field.

In some embodiments, the second DCI format also schedules transmission of uplink data while indicating the SRS resource set associated with the TCI state; or the second DCI format does not schedule uplink data transmission when it indicates the SRS resource set associated with the TCI state.

In some embodiments, the determining unit 1502 performs determination based on the reference signal in an uplink TCI state or a joint TCI state; or the determining unit 1502 performs determination based on the reference signal in the PUCCH spatial relation information.

In some embodiments, the SRS resource set associated with the TCI state is indicated by a TCI field in the first DCI format; and/or, indicated by an unused field in the first DCI format; and/or, indicated by a new field in the first DCI format.

In some embodiments, in the case where the second DCI format is received before the determining unit 1502 determines the SRS resource set associated with the TCI state, the determining unit 1502 determines the SRS resource set associated with the TCI state based on the SRS resource set indicator field or the SRS request field of the second DCI format received in the latest time; in the case where the second DCI format is not received before the determining unit 1502 determines the SRS resource set associated with the TCI state, the determining unit 1502 determines the first SRS resource set of multiple SRS resource sets as the SRS resource set associated with the TCI state.

In some embodiments, wherein the multiple SRS resource sets are SRS resource sets associated with at least one of the following signals/channels:
a physical uplink shared channel (PUSCH) based on a dynamic grant;
a PUSCH based on a Type 1 configured grant;
a PUSCH based on a Type 2 configured grant;
a periodic SRS (Periodic SRS);
a semi-persistent sounding reference signal (SRS);
an aperiodic SRS; or
a physical uplink control channel (PUCCH).

In some embodiments, the PUSCH transmission and/or the PUCCH transmission based on a dynamic grant are(is) transmission of PUSCH and/or PUCCH based on single DCI (sDCI) scheduling multiple transmission and reception point (multiple TRP, mTRP).

In some embodiments, in the case where the TCI state indication information indicates one uplink TCI state or one joint TCI state, the transmitting unit 1503 transmits all PUSCH repetitions, wherein all the PUSCH repetitions are associated with the SRS resource set associated with the TCI state and/or an uplink TCI state or a joint TCI state; or in the case where the TCI state indication information indicates an uplink TCI state or a joint TCI state, the transmitting unit 1503 transmits a part of PUSCH repetitions, wherein the part of PUSCH repetitions are associated with the SRS resource set associated with the TCI state and/or the uplink TCI state or the joint TCI state.

In some embodiments, the parameter associated with the SRS resource set associated with the TCI state includes at least one of the following parameters:
an SRS resource indicator (SRI), a precoding matrix indicator (PMI), the number of layers, the number of antennas, an antenna index, or a power control parameter; the parameters associated with the TCI state include power control parameters.

In some embodiments, the first DCI format indicates TCI state indication information;
the second DCI format indicates or activates at least one of the following:
physical uplink shared channel (PUSCH) transmission based on a dynamic grant;
PUSCH transmission based on a Type 2 configured grant;
physical uplink control channel (PUCCH) transmission;
semi-persistent sounding reference signal (SRS) transmission; or
aperiodic SRS transmission.

The embodiments above only schematically illustrate the present application, but the present application is not limited to this, and appropriate variations can also be made on the basis of the above embodiments. For example, the above embodiments may be used separately, or one or more of the above embodiments may be combined.

It is worth noting that only the components or modules related to the present application are illustrated hereinabove, but the present application is not limited to this. The signal transmitting apparatus 1500 may further include other components or modules, and the details of these components or modules may be seen by referring to the related art.

In addition, for the sake of simplicity, FIG. 15 only exemplarily shows the connection relationship or signal trend between the individual components or modules, but it should be clear to those skilled in the art that various related techniques such as bus connections can be employed. The above individual components or modules may be implemented by hardware facilities such as a processor, a memory, a transmitter, a receiver, etc., which is not limited in the present application.

As can be seen from the above embodiments, the terminal equipment receives TCI state indication information, the TCI state indication information indicating at least one TCI state; determines, among multiple SRS resource sets, an SRS resource set associated with an indicated TCI state; and performs uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission may be ensured.

### Embodiments of Fourth Aspect

The embodiments of the present application provide a signal receiving apparatus. The apparatus may be, for example, a network device, or one or more parts or components configured in the network device, and the same content as the embodiments of the first to third aspects will not be repeated.

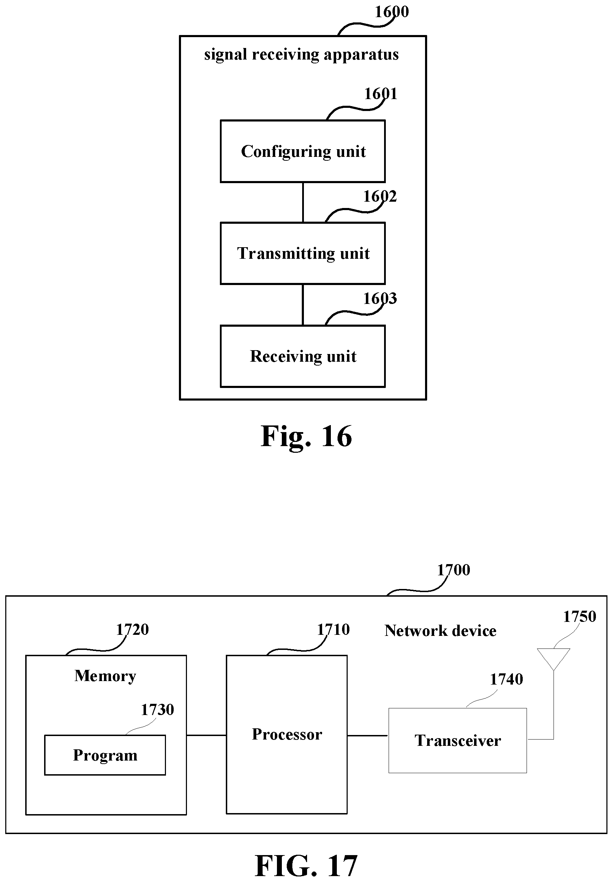

FIG. 16 is a schematic diagram of a signal receiving apparatus in the embodiments of the present application. As shown in FIG. 16, the signal receiving apparatus 1600 includes:
a configuring unit 1601 configured to configure multiple SRS resource sets;
a transmitting unit 1602 configured to transmit TCI state indication information, the TCI state indication information indicating at least one TCI state; and
a receiving unit 1603 configured to receive an uplink signal transmitted by a terminal equipment, wherein the terminal equipment transmits the uplink signal by using a parameter associated with an SRS resource set associated with the TCI state and/or a parameter associated with the TCI state.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The signal receiving apparatus 1600 may further include other components or modules, and the details of these components or modules may be seen by referring to the related art.

In addition, for the sake of simplicity, FIG. 16 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiment, the terminal equipment receives TCI state indication information, the TCI state indication information indicating at least one TCI state; determines, among multiple SRS resource sets, an SRS resource set associated with an indicated TCI state; and performs uplink signal transmission by using a parameter associated with the SRS resource set associated with the TCI state and/or a parameter associated with the TCI state. In this way, it is possible to avoid the ambiguity for the terminal equipment as regards an uplink transmission parameter for which TRP is used, and the terminal equipment performs uplink transmission by using the appropriate uplink transmission parameter, so that the throughput or reliability of the uplink transmission may be ensured.

### Embodiments of Fifth Aspect

The embodiments of the present application further provide a communication system, referring to FIG. 1, the same content as the embodiments in the first to fourth aspects will not be repeated.

In some embodiments, the communication system 100 may include at least:
a network device configured to configure multiple SRS resource sets; and to transmit TCI state indication information;
a terminal equipment configured to receive the TCI state indication information, the TCI state indication information indicating at least one TCI state; to determine, among multiple SRS resource sets, an SRS resource set associated with an indicated TCI state; and to perform uplink transmission by using a parameter associated with the SRS resource set associated with the TCI state and/or a parameter associated with the TCI state.

The embodiments of the present application further provide a network device, which may be, for example, a base station, but which is not limited in the present application, and can also be other network devices.

FIG. 17 is a schematic diagram of composition of the network device in the embodiments of the present application. As shown in FIG. 17, the network device 1700 may include a processor 1710 (such as a central processing unit (CPU)) and a memory 1720; the memory 1720 is coupled to the processor 1710. The memory 1720 can store various data and also can store the information processing program 1730, and the program 1830 is executed under the control of the processor 1810.

In addition, as shown in FIG. 17, the network device 1700 may further include: a transceiver 1740 and an antenna 1750, etc.; wherein the functions of the above components are similar to the prior art, and will not be repeated here. It is worth noting that the network device 1700 is not necessarily required to include all of the components shown in FIG. 17; in addition, the network device 1700 may further include components not shown in FIG. 17, with reference to the relevant art.

The embodiments of the present application further provide a terminal equipment, but which is not limited in the present application, and may also be other devices.

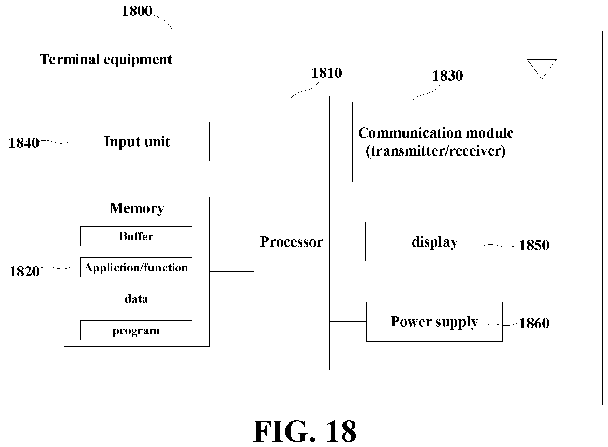

FIG. 18 is a schematic diagram of a terminal equipment in the embodiments of the present application. As shown in FIG. 18, the terminal equipment 1800 may include a processor 1810 and a memory 1820; the memory 1820 stores data and program, and is coupled to the processor 1810. It is worth noting that this figure is exemplary; other types of structures may also be used in addition to or instead of the structure to implement telecommunications functions or other functions.

For example, the processor 1810 may be configured to execute the program to implement the inter-UE coordination method as described in the embodiments of the first aspect. For example, the processor 1810 can be configured to perform the following controls of: receiving TCI state indication information, the TCI state indication information indicating at least one TCI state; determining, among the configured multiple SRS resource sets, an SRS resource set associated with an indicated TCI state; and performing uplink transmission by using a parameter associated with the SRS resource set associated with the TCI state and/or a parameter associated with the TCI state.

As shown in FIG. 18, the terminal equipment 1800 may further include a communication module 1830, an input unit 1840, a display 1850, and a power supply 1860. The functions of the above components are similar to the relevant art, and will not be repeated here. It is worth noting that the terminal equipment 1800 is not necessarily required to include all of the components shown in FIG. 18, and the above components are not essential; in addition, the terminal equipment 1800 may further include components not shown in FIG. 18, with reference to the relevant art.

The embodiments of the present application further provide a computer program which, when being executed in the terminal equipment, causes the terminal equipment to execute the signal transmitting method described in the embodiments of the first aspect.

The embodiments of the present application further provide a storage medium storing a computer program which causes the terminal equipment to execute the signal transmitting method described in the embodiments of the first aspect.

The embodiments of the present application further provide a computer program which, when being executed in the terminal equipment, causes the terminal equipment to execute the signal receiving method described in the embodiments of the second aspect.

The embodiments of the present application further provide a storage medium storing a computer program which causes the terminal equipment to execute the signal receiving method described in the embodiments of the second aspect.

The above devices and methods of the present application can be implemented by hardware or by hardware combined with software. The present application relates to a computer readable program which, when being executed by a logic unit, enables the logic unit to implement the devices or components mentioned above, or enables the logic unit to implement the methods or steps described above. The present application also relates to storage medium for storing the above programs, such as a hard disk, a magnetic disk,, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to principle of the application, and these variations and modifications should also be within the scope of the present application.

For implementation including the above embodiments, the following appendices are further disclosed:
1. A signal transmitting method, wherein a terminal equipment is configured with multiple SRS resource sets, the method including:
   receiving, by the terminal equipment, TCI state indication information, the TCI state indication information indicating at least one TCI state;
   determining, among the multiple SRS resource sets, an SRS resource set associated with an indicated TCI state; and
   performing uplink signal transmission by using a parameter associated with the SRS resource set associated with the TCI state and/or a parameter associated with the TCI state.
2. The method according to the appendix 1, wherein,
   the TCI state indication information is carried by a TCI field in a first DCI format.
3. The method according to the appendix 1, wherein,
   the TCI state indication information indicates one uplink TCI state and/or one downlink TCI state; or
   the TCI state indication information indicates a joint TCI state used for indicating an uplink TCI state and a downlink TCI state.
4. The method according to any of the appendices 1 to 3, wherein,
   in a case where the TCI state indication information indicates an uplink TCI state or a joint TCI state, determining an SRS resource set associated with the uplink TCI state or the joint TCI state in the multiple SRS resource sets.
5. The method according to the appendix 4, wherein,
   before the TCI state indication information indicates an uplink TCI state or a joint TCI state, the TCI state indication information indicated two uplink TCI states or two joint TCI states.
6. The method according to any of the appendices 1 to 5, wherein the TCI state indication information indicates at least one of the following TCI states:
   a joint TCI state;
   two joint TCI states;
   two downlink TCI states and two uplink TCI states;
   one downlink TCI state and one uplink TCI state;
   two downlink TCI states and one uplink TCI state;
   two uplink TCI states and one downlink TCI state;
   two downlink TCI states;
   two uplink TCI states;
   one downlink TCI state; or
   one uplink TCI state.
7. The method according to any of the appendices 1 to 5, wherein,
   the SRS resource set associated with the TCI state is a predetermined SRS resource set among the multiple SRS resource sets; and/or
   the SRS resource set associated with the TCI state is determined based on an indication of the second DCI format; and/or
   the SRS resource set associated with the TCI state is determined based on a reference signal; and/or
   the SRS resource set associated with the TCI state is determined based on an indication of the first DCI format.
8. The method according to the appendix 1, wherein,
   the SRS resource set associated with the TCI state is a first SRS resource set in the multiple SRS resource sets.
9. The method according to the appendix 1, wherein,
   the SRS resource set associated with the TCI state is indicated by an SRS resource set indicator field; or
   the SRS resource set associated with the TCI state is indicated by an SRS request field.
10. The method according to the appendix 9, wherein, when the TCI state indication information indicates one uplink TCI state or one joint TCI state, the SRS resource set associated with the TCI state is indicated by the SRS resource set indicator field or the SRS request field.
11. The method according to the appendix 9, wherein,
   the second DCI format also schedules transmission of uplink data in a case of indicating the SRS resource set associated with the TCI state; or
   the second DCI format does not schedule transmission of uplink data in a case of indicating the SRS resource set associated with the TCI state.
12. The method according to the appendix 1, wherein,
   the SRS resource set associated with the TCI state is determined based on the reference signal in the uplink TCI state or the joint TCI state; or
   the SRS resource set associated with the TCI state is determined based on a reference signal in PUCCH spatial relation information.
13. The method according to the appendix 12, wherein,
   the PUCCH resource indication field indicates the PUCCH resource with one spatial relation information being activated, and does not indicate the PUCCH resource with more than one spatial relation information being activated.
14. The method according to the appendix 1, wherein,
   the SRS resource set associated with the TCI state is indicated by a TCI field in the first DCI format; and/or
   the SRS resource set associated with the TCI state is indicated by an unused field of the first DCI format; and/or
   the SRS resource set associated with the TCI state is indicated by a new field in the first DCI format.
15. The method according to the appendix 1, wherein,
   in the case where the SRS resource set associated with the TCI state is indicated by the TCI field in the first DCI format,
   the SRS resource set associated with the TCI state determined based on at least one of the SRS resource set indication field, the SRS request field, the PUCCH resource indication field is the same as the SRS resource set associated with the TCI state indicated or determined based on the TCI field.
16. The method according to the appendix 1, wherein,
   in the case where the second DCI format is received before the SRS resource set associated with the TCI state is determined, the SRS resource set associated with the TCI state is indicated by the SRS resource set indicator field or the SRS request field in the second DCI format that is received in the latest time;
   in the case where the second DCI format is not received before the SRS resource set associated with the TCI state is determined, the SRS resource set associated with the TCI state is the first SRS resource set among the multiple SRS resource sets.
17. The method according to any of the appendices 1 to 16, wherein the multiple SRS resource sets are SRS resource sets associated with at least one of the following signals/channels:
   a physical uplink shared channel (PUSCH) based on a dynamic grant;
   a PUSCH based on a Type 1 configured grant;
   a PUSCH based on a Type 2 configured grant;
   a periodic SRS (Periodic SRS);
   a semi-persistent sounding reference signal (SRS);
   an aperiodic SRS; or
   a physical uplink control channel (PUCCH).
18. The method according to the appendix 17, wherein transmission of the PUSCH and/or the PUCCH based on a dynamic grant are(is) transmission of PUSCH and/or PUCCH based on single DCI (sDCI) scheduling multiple transmission and reception point (multiple TRP, mTRP).
19. The method according to any of the appendices 1 to 18, wherein the parameter associated with the SRS resource set associated with the TCI state includes at least one of the following parameters:
   an SRS resource indicator (SRI), a precoding matrix indicator (PMI), the number of layers, the number of antennas, an antenna index, or a power control parameter.
20. The method according to any of the appendices 1 to 18, wherein the parameter associated with the TCI state includes a power control parameter.
21. The method according to any of the appendices 1 to 20, wherein the method further includes:
   in the case where the TCI state indication information indicates an uplink TCI state or a joint TCI state, transmitting all PUSCH repetitions, wherein all the PUSCH repetitions are associated with the SRS resource set associated with the TCI state and/or the uplink TCI state or the joint TCI state; or
   when the TCI state indication information indicates an uplink TCI state or a joint TCI state, transmitting a part of PUSCH repetitions, wherein the part of PUSCH repetitions are associated with the SRS resource set associated with the TCI state and/or the uplink TCI state or the joint TCI state.
22. The method according to any of the appendices 1 to 21, wherein,
   when the TCI state indication information indicates an uplink TCI state or a joint TCI state, transmitting the SRS within the SRS resource set associated with the TCI state.
23. The method according to any of the appendices 1 to 21, wherein,
   the first DCI format indicates TCI state indication information;
   the second DCI format indicates or activates at least one of the following:
      physical uplink shared channel (PUSCH) transmission based on a dynamic grant;
      PUSCH transmission based on a Type 2 configured grant;
      physical uplink control channel (PUCCH) transmission;
      semi-persistent sounding reference signal (SRS) transmission; or
      aperiodic SRS transmission.
24. The method according to the appendix 17, wherein the PUSCH transmission based on dynamic grant is scheduled or the PUSCH transmission based on Type 2 configured grant is activated by DCI format 0_0, and the PUSCH is considered to be associated with the 1st SRS resource set.
25. A signal receiving method, applied to a network device, the method including:
   configuring multiple SRS resource sets;
   transmitting TCI state indication information, the TCI state indication information indicating at least one TCI state; wherein at least one of the multiple SRS resource sets is associated with the TCI state;
   receiving an uplink signal transmitted by a terminal equipment, wherein the terminal equipment transmits the uplink signal by using a parameter associated with the SRS resource set associated with the TCI state and/or a parameter associated with the TCI state.
26. The method according to the appendix 25, wherein,
   the TCI state indication information is carried by a TCI field in a first DCI format.
27. The method according to the appendix 26, wherein,
   the TCI state indication information indicates one uplink TCI state and/or one downlink TCI state; or
   the TCI state indication information indicates a joint TCI state used for indicating an uplink TCI state and a downlink TCI state.
28. The method according to any of the appendices 25 to 27, wherein,
   in a case where the TCI state indication information indicates an uplink TCI state or a joint TCI state, the terminal equipment determines an SRS resource set associated with the uplink TCI state or the joint TCI state in the multiple SRS resource sets.
29. The method according to the appendix 28, wherein,
   before the TCI state indication information indicates an uplink TCI state or a joint TCI state, the TCI state indication information indicated two uplink TCI states or two joint TCI states.
30. The method according to any of the appendices 25 to 29, wherein the TCI state indication information indicates at least one of the following TCI states:
   a joint TCI state;
   two joint TCI states;
   two downlink TCI states and two uplink TCI states;
   one downlink TCI state and one uplink TCI state;
   two downlink TCI states and one uplink TCI state;
   two uplink TCI states and one downlink TCI state;
   two downlink TCI states;
   two uplink TCI states;
   one downlink TCI state; or
   one uplink TCI state.
31. The method according to any of the appendices 25 to 30, wherein the multiple SRS resource sets are SRS resource sets associated with at least one of the following signals/channels:
   a physical uplink shared channel (PUSCH) based on a dynamic grant;
   a PUSCH based on a Type 1 configured grant;
   a PUSCH based on a Type 2 configured grant;
   a periodic SRS (Periodic SRS);
   a semi-persistent sounding reference signal (SRS);
   an aperiodic SRS; or
   a physical uplink control channel (PUCCH).
32. The method according to the appendix 31, wherein transmission of the PUSCH and/or the PUCCH based on a dynamic grant are(is) transmission of PUSCH and/or PUCCH based on single DCI (sDCI) scheduling multiple transmission and reception point (multiple TRP, mTRP).
33. A terminal equipment including a memory storing a computer program and a processor configured to execute the computer program to implement the signal transmitting method according to any of the appendices 1 to 24.
34. A network device including a memory storing a computer program and a processor configured to execute the computer program to implement the signal receiving method according to any of the appendices 25 to 32.
35. A communication system including:
   a network device configured to configure multiple SRS resource sets; and to transmit TCI state indication information;
   a terminal equipment configured to receive the TCI state indication information, the TCI state indication information indicating at least one TCI state; to determine, among multiple SRS resource sets, an SRS resource set associated with an indicated TCI state; and to perform uplink transmission by using a parameter associated with the SRS resource set associated with the TCI state and/or a parameter associated with the TCI state.

## Claims

1. A signal transmission apparatus, comprising:
a receiving unit configured to receive TCI state indication information, the TCI state indication information indicating at least one TCI state;
a determining unit configured to determine an SRS resource set associated with an indicated TCI state in configured multiple SRS resource sets; and
a transmitting unit configured to perform uplink transmission by using a parameter associated with the SRS resource set associated with the TCI state and/or a parameter associated with the TCI state.

2. The apparatus according to claim 1, wherein,
the TCI state indication information is carried by a TCI field in a first DCI format.

3. The apparatus according to claim 1, wherein,
the TCI state indication information indicates one uplink TCI state and/or one downlink TCI state; or
the TCI state indication information indicates a joint TCI state used for indicating an uplink TCI state and a downlink TCI state.

4. The apparatus according to any one of claims 1-3, wherein,
in a case where the TCI state indication information indicates an uplink TCI state or a joint TCI state, the determining unit determines an SRS resource set associated with the uplink TCI state or the joint TCI state in the multiple SRS resource sets.

5. The apparatus according to claim 4, wherein,
before the TCI state indication information indicates an uplink TCI state or a joint TCI state, the TCI state indication information indicated two uplink TCI states or two joint TCI states.

6. The apparatus according to claim 5, wherein the TCI state indication information indicates at least one of the following TCI states:
a joint TCI state;
two joint TCI states;
two downlink TCI states and two uplink TCI states;
one downlink TCI state and one uplink TCI state;
two downlink TCI states and one uplink TCI state;
two uplink TCI states and one downlink TCI state;
two downlink TCI states;
two uplink TCI states;
one downlink TCI state; or
one uplink TCI state.

7. The apparatus according to claim 1, wherein that the determining unit determines the SRS resource set associated with the TCI state comprises:
determining based on a predetermined SRS resource set in the multiple SRS resource sets;
determining based on an indication of a second DCI format;
determining based on a reference signal; or
determining based on an indication of the first DCI format.

8. The apparatus according to claim 7, wherein,
the SRS resource set associated with the TCI state is a first SRS resource set in the multiple SRS resource sets.

9. The apparatus according to claim 7, wherein,
the SRS resource set associated with the TCI state is indicated by an SRS resource set indicator field in the second DCI format; or
the SRS resource set associated with the TCI state is indicated by an SRS request field in the second DCI format.

10. The apparatus according to claim 9, wherein,
when the TCI state indication information indicates one uplink TCI state or one joint TCI state, the SRS resource set associated with the TCI state is indicated by the SRS resource set indicator field or the SRS request field.

11. The apparatus according to claim 9, wherein,
the second DCI format also schedules transmission of uplink data in a case of indicating the SRS resource set associated with the TCI state; or
the second DCI format does not schedule transmission of uplink data in a case of indicating the SRS resource set associated with the TCI state.

12. The apparatus according to claim 7, wherein,
the determining unit performs determination based on a reference signal in the uplink TCI state or the joint TCI state; or
the determining unit perform determination based on a reference signal in PUCCH spatial relation information.

13. The apparatus according to claim 7, wherein,
indicating by the TCI field of the first DCI format; and/or
indicating by an unused field of the first DCI format; and/or
indicating by a new field of the first DCI format.

14. The apparatus according to claim 7, wherein,
in a case where the second DCI format is received before the determining unit determines the SRS resource set associated with the TCI state, the determining unit determines the SRS resource set associated with the TCI state based on the SRS resource set indicator field or the SRS request field of the second DCI format received in the latest time;
and in a case where the second DCI format is not received before the determining unit determines the SRS resource set associated with the TCI state, the determining unit determines a first SRS resource set in the multiple SRS resource sets as the SRS resource set associated with the TCI state.

15. The apparatus according to any one of claims 1 to 3, wherein the multiple SRS resource sets are SRS resource sets associated with at least one of the following signals/channels:
a physical uplink shared channel (PUSCH) based on a dynamic grant;
a PUSCH based on a Type 1 configured grant;
a PUSCH based on a Type 2 configured grant;
a periodic SRS (Periodic SRS);
a semi-persistent sounding reference signal (SRS);
an aperiodic SRS; or
a physical uplink control channel (PUCCH).

16. The apparatus according to claim 15, wherein transmission of the PUSCH and/or the PUCCH based on a dynamic grant are(is) transmission of PUSCH and/or PUCCH based on single DCI (sDCI) scheduling multiple transmission and reception point (multiple TRP, mTRP).

17. The apparatus according to any one of claims 1 to 3, wherein,
when the TCI state indication information indicates an uplink TCI state or a joint TCI state, the transmitting unit transmits all PUSCH repetitions, wherein all the PUSCH repetitions are associated with the SRS resource set associated with the TCI state and/or the uplink TCI state or the joint TCI state; or
when the TCI state indication information indicates an uplink TCI state or a joint TCI state, the transmitting unit transmits a part of PUSCH repetitions, wherein the part of PUSCH repetitions are associated with the SRS resource set associated with the TCI state and/or the uplink TCI state or the joint TCI state.

18. The apparatus according to any one of claims 1-3, wherein,
the parameter associated with the SRS resource set associated with the TCI state comprises at least one of the following parameters:
an SRS resource indicator (SRI), a precoding matrix indicator (PMI), the number of layers, the number of antennas, an antenna index, or a power control parameter;
the parameter associated with the TCI state comprises a power control parameter.

19. The apparatus according to claim 7, wherein,
the first DCI format indicates TCI state indication information;
the second DCI format indicates or activates at least one of the following:
physical uplink shared channel (PUSCH) transmission based on a dynamic grant;
PUSCH transmission based on a Type 2 configured grant;
physical uplink control channel (PUCCH) transmission;
semi-persistent sounding reference signal (SRS) transmission; or
aperiodic SRS transmission.

20. A signal reception apparatus, comprising:
a configuring unit configured to configure multiple SRS resource sets;
a transmitting unit configured to transmit TCI state indication information, the TCI state indication information indicating at least one TCI state; and
a receiving unit configured to receive an uplink signal transmitted by a terminal equipment, wherein the terminal equipment transmits the uplink signal by using a parameter associated with an associated SRS resource set and/or a parameter associated with the TCI state.
